Europäisches Patentamt

European Patent Office

Office européen des brevets

(19)

(11) Veröffentlichungsnummer: **0 038 950**
**B1**

# (12) EUROPÄISCHE PATENTSCHRIFT

(45) Veröffentlichungstag der Patentschrift:
**29.01.86**

(21) Anmeldenummer: **81102467.8**

(22) Anmeldetag: **01.04.81**

(51) Int. Cl.⁴: **G 01 L 1/24,** G 01 B 11/16

(54) Sensorvorrichtung mit einer als empfindliches Element dienenden Lichtleitfaser.

(30) Priorität: **25.04.80 DE 3016104**

(43) Veröffentlichungstag der Anmeldung:
**04.11.81 Patentblatt 81/44**

(45) Bekanntmachung des Hinweises auf die Patenterteilung:
**29.01.86 Patentblatt 86/5**

(84) Benannte Vertragsstaaten:
**FR GB**

(56) Entgegenhaltungen:
**WO - A - 79/00377**
**GB - A - 1 544 483**
**GB - A - 2 029 982**
**US - A - 3 625 589**
**US - A - 4 151 747**

(73) Patentinhaber: **Siemens Aktiengesellschaft, Berlin und München Wittelsbacherplatz 2, D-8000 München 2 (DE)**

(72) Erfinder: **Schiffner, Gerhard, Dr., Annette-Kolb-Anger 7, D-8000 München 83 (DE)**

ACTORUM AG

## Beschreibung

Die vorliegende Erfindung betrifft eine Sensorvorrichtung mit einer Mehrkernfaser, die als gegenüber physikalischen Einwirkungen empfindliches Element dient, nach dem Oberbegriff des Patentanspruchs 1.

Eine Sensorvorrichtung der genannten Art ist beispielsweise aus der US-A-4 151 747 bekannt. Diese bekannte Sensorvorrichtung ist ein Temperatursensor, d. h. die physikalische Einwirkung auf die Mehrkernfaser besteht in der Temperatur.

Aufgabe der vorliegenden Erfindung ist es, eine Sensorvorrichtung der eingangs genannten Art anzugeben, die besonders empfindlich auf Verbiegungen der Faser reagiert.

Diese Aufgabe wird durch die im kennzeichnenden Teil des Patentanspruchs 1 angegebenen Merkmale gelöst.

Der Erfindung liegt die Erkenntnis zugrunde, dass eine Sensorvorrichtung der eingangs genannten Art prinzipiell auch als biegeempfindliche Sensorvorrichtung geeignet ist, d. h. die physikalische Einwirkung auf die Mehrkernfaser besteht in einer Verbiegung der Faser. Es wurde aber gefunden, dass bei einer Sensorvorrichtung der eingangs genannten Art die Mehrkernfaser einmal mehr und einmal weniger empfindlich auf Verbiegungen reagiert. Es wurde erkannt, dass dies seine Ursache in der Lage der beiden Kerne relativ zur Richtung der Verbiegung hat, wobei die Biegeempfindlichkeit der Mehrkernfaser am grössten ist, wenn die kürzeste Verbindungsgerade zwischen den beiden Kernen in Richtung der Verbiegung ausgerichtet ist, während sie gegen Verbiegungen praktisch unempfindlich ist, wenn diese Verbindungsgerade senkrecht zur Richtung der Verbiegung angeordnet ist.

Bei der erfindungsgemässen Sensorvorrichtung ist die Faser praktisch für jede Verbiegung, d. h. für Verbiegungen in beliebigen Richtungen, empfindlich.

Bevorzugte und vorteilhafte Ausgestaltungen einer erfindungsgemässen Sensorvorrichtung gehen aus den Ansprüchen 2 bis 4 hervor.

Die Erfindung wird anhand der beigefügten Figuren in der nun folgenden Beschreibung näher erläutert. Es zeigen:

Fig. 1 ein eingespanntes Endstück einer um ihre Längsachse verdrehten Zweikernfaser, neben der eine Empfangseinrichtung angeordnet ist, welche Licht, das aus den Kernen der Zweikernfaser ausgekoppelt worden ist, empfängt;

Die Fig. 2a bis 2c Querschnitte durch die Zweikernfaser in Fig. 1 längs der Schnittlinien I–I, II–II bzw. III–III, welche die Anordnung der Kerne in der verdrehten Faser an verschiedenen Stellen zeigen;

Fig. 2d einen Querschnitt durch eine Mehrkernfaser mit vier Kernen;

Fig. 3 eine Mehrkernfaser, die an einem Ende eingespannt ist und auf deren Stirnfläche am anderen Ende ein Spiegel aufgebracht ist;

Fig. 4 ein Endstück einer Mehrkernfaser mit Kernen, die soweit voneinander entfernt sind, dass keine nennenswerte Überkopplung auftritt und eine Empfangseinrichtung mit Auffangschirm, welcher das aus den Kernen ausgekoppelte und zur Interferenz gebrachte Licht empfängt;

Fig. 5 eine Empfangseinrichtung und eine damit kombinierte Einkoppelvorrichtung für eine Mehrkernfaser, bei der über die gleiche Stirnfläche ein- und ausgekoppelt wird und die besonders für Mehrkernfasern mit weit voneinander angeordneten Kernen geeignet sind;

Fig. 6 eine Empfangseinrichtung und eine damit kombinierte Einkoppelvorrichtung für eine Mehrkernfaser, bei der ebenfalls über die gleiche Stirnfläche ein- und ausgekoppelt wird und die besonders für Mehrkernfasern mit nahe beieinander liegenden Kernen geeignet sind;

Fig. 7 eine aus einem optischen Richtkoppler bestehende Einkoppelvorrichtung;

Fig. 8 einen Ausschnitt aus einer Empfangseinrichtung, wie sie in Fig. 5 dargestellt ist, bei der in einem Strahlengang ein optischer Phasenmodulator angeordnet ist.

Die Figuren sind nicht massstabsgetreu. Die Dicke der Zweikernfaser und der Mehrkernfasern ist dabei stark übertrieben dargestellt.

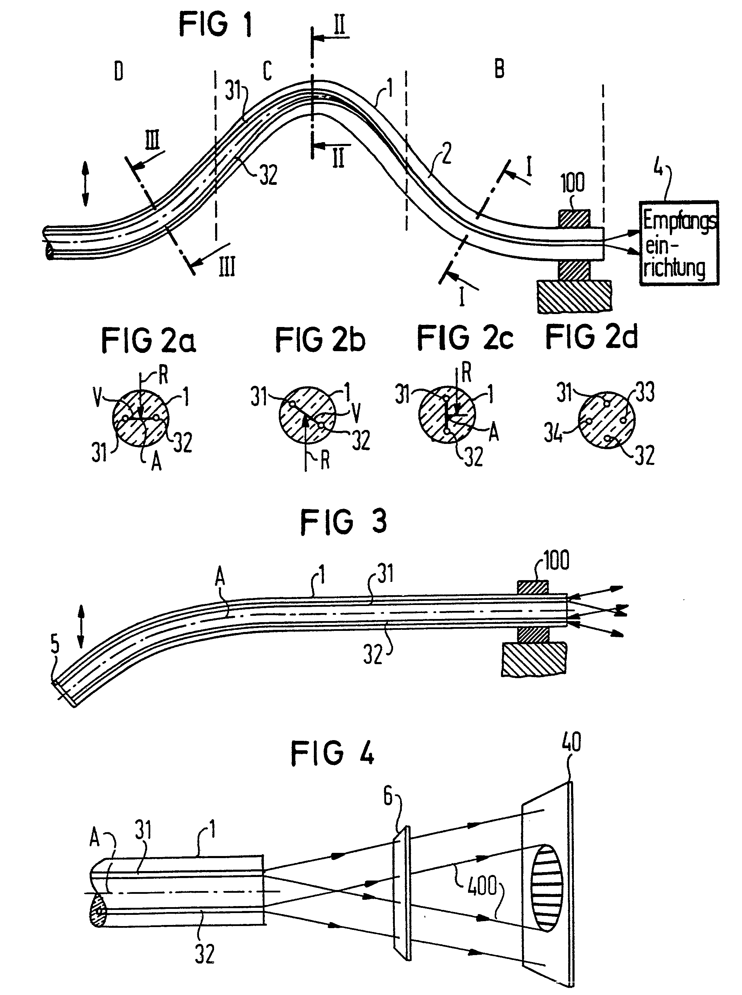

Fig. 1 zeigt zunächst den Grundaufbau einer herkömmlichen Sensorvorrichtung. Sie besteht im wesentlichen aus der Zweikernfaser 1 mit den beiden nebeneinander verlaufenden Kernen 31 und 32, die von einem gemeinsamen Mantel 2 umgeben sind, und aus der lichtempfindlichen Empfangseinrichtung 4, welche Licht, das durch die Kerne 31 und 32 hindurchgegangen ist, empfängt und mit der Veränderungen eines Parameters dieses Lichts feststellbar sind.

Die Biegeempfindlichkeit der herkömmlichen Sensorvorrichtung beruht darauf, dass bei einer Verbiegung der Zweikernfaser sich optische Eigenschaften der beiden Kerne relativ zueinander ändern können und damit auch bestimmte Parameter eines Lichts, das die beiden Kerne durchläuft. Derartige relative Änderungen der beiden Kerne können allerdings auch durch andere mechanische Einwirkungen auf die Faser, beispielsweise durch ein Zusammendrücken bewirkt werden.

Beispielsweise können bei einer Verbiegung sich Weglängen und Brechzahlen der beiden Kerne und damit auch Laufzeiten von Licht durch die beiden Kerne relativ zueinander ändern. Die Laufzeitdifferenzen können als physikalischer Parameter des durch die Kerne hindurchgegangenen Lichts gemessen werden und sind ein Mass für die Verbiegung oder anderweitige Deformation der Faser.

Grösste Laufzeitunterschiede werden in einer Krümmung dann erhalten, wenn die kürzeste Verbindung V zwischen den beiden Kernen 31 und 32 in Richtung eines Krümmungsradius R verläuft. Dieser Fall ist in der Fig. 2c im Querschnitt dargestellt. Verläuft in diesem Fall die Achse A der Faser auch noch zwischen den beiden Kernen, so wird der radial äussere Kern gedehnt und der radial innere Kern gestaucht, wodurch besonders grosse Laufzeitunterschiede erhalten werden.

Verläuft dagegen die kürzeste Verbindung V senkrecht zum Krümmungsradius R, so werden keine Laufzeitunterschiede erzeugt. Dieser ungünstigste Fall ist in der Fig. 2d im Querschnitt durch die Mehrkernfaser 1 dargestellt.

Es ist zweckmässig, die Zweikernfaser 1 längs der Achse A zu verdrehen, beispielsweise um 90°. Die Faser wird so in zwei oder mehrere Längsbereiche unterteilt, die sich dadurch voneinander unterscheiden, dass sie gegen die gleiche Verbiegung unterschiedlich empfindlich sind. Bei der Zweikernfaser 1 in Fig. 1 ist eine Verdrehung der Faser angenommen. In dem in der Einspannvorrichtung 100 eingespannten Endabschnitt B steht die kürzeste Verbindung V senkrecht auf der Zeichenebene. In dem daran anschliessenden Abschnitt C ist die Faser verdreht und die kürzeste Verbindung V dreht sich in diesem Bereich allmählich von der vertikalen Stellung in eine zur Zeichenebene parallele Stellung, die sie an der Grenze zum Abschnitt D erreicht, der sich an den Abschnitt C anschliesst. In diesem Bereich ist die Faser für Verbiegungen parallel zur Zeichenebene optimal empfindlich, während sie im Abschnitt B auf solche Verbiegungen überhaupt nicht reagiert. In diesem Bereich B reagiert die Faser optimal auf Verbiegungen senkrecht zur Zeichenebene, während sie im Abschnitt D auf solche Verbiegungen überhaupt nicht reagiert. Im Bereich C ist die Faser für Verbiegungen in verschiedenen Richtungen schräg zur Zeichenebene optimal empfindlich.

Die Fig. 2a bis 2c zeigen der Reihe nach Querschnitte durch die Faser 1 in Fig. 1 längs den Schnittlinien I–I bis III–III.

Eine Mehrkernfaser kann auch für verschiedene Biegerichtungen optimal empfindlich gemacht werden, wenn sie drei oder mehrere Kerne aufweist, die im Querschnitt nicht kollinear angeordnet sind. In der Fig. 2d ist im Querschnitt ein Beispiel gezeigt. Diese im Querschnitt dargestellte Mehrkernfaser weist vier Kerne 31 bis 34 auf, die auf den Ecken eines Rechtecks angeordnet sind. Die vier Rechteckseiten und die beiden Diagonalen des Rechtecks sind als kürzeste Verbindungen zwischen zwei Kernen jeweils optimale Richtungen, d.h. bei einer Verbiegung der Faser in einer solchen Richtung ist sie optimal empfindlich. Allerdings ist die lichtempfindliche Einrichtung 4 so auszubilden, dass sie Laufzeitunterschiede zwischen den beiden Kernen eines jeden verwendeten Kernpaares feststellen kann. Bei der Mehrkernfaser nach Fig. 2d können sechs Kernpaare verwendet werden, nämlich die Kernpaare (31, 33), (33, 32), (31, 32), (32, 34), (31, 34) und (33, 34). Die Kernpaare (31, 33) und (33, 32) sind wie die Kernpaare (31, 32) und (32, 34) gleichwertig, weil ihre Rechteckseiten jeweils parallel zueinander verlaufen. Ein Kernpaar, dessen kürzeste Verbindung parallel zu derjenigen eines anderen Kernpaares verläuft, trägt zur Verbesserung der Biegeempfindlichkeit für eine andere Richtung nichts bei. Genauso wenig würde ein zusätzlicher Kern, der im Querschnitt kollinear zu zwei anderen Kernen angeordnet ist, zu einer Verbesserung der Biegeempfindlichkeit für eine andere Richtung beitragen.

In der Fig. 3 ist eine Ausführungsform einer Mehrkernfaser 1 dargestellt, bei der auf einer Stirnfläche ein Spiegel 5 aufgebracht ist, der bewirkt, dass Licht, das durch jeden der beiden Kerne 31 oder 32 zu ihm gelangt, in diesen Kern zurückreflektiert wird und ihn in der entgegengesetzten Richtung durchläuft.

Der Spiegel 5 kann so hergestellt werden, dass ein abgeschliffenes oder gut gebrochenes Ende der Mehrkernfaser 1 verspiegelt wird, beispielsweise durch Aufdampfen einer Metallschicht.

Bei der Faser nach der Fig. 3 erfolgt die Einkoppelung von Licht in die Kerne 31 und 32 und die Auskoppelung des Lichts, das die Kerne zweimal durchlaufen hat, über die gleiche Stirnfläche der Faser. Da das Licht in dieser Faser einen Kern zweimal durchläuft, ist die Laufzeit doppelt so gross als bei einer gleichlangen Faser, bei der über verschiedene Stirnflächen ein- und ausgekoppelt wird.

Laufzeitunterschiede können vorteilhaft mit einer Interferometeranordnung gemessen werden. Es ist also für diesen Fall zweckmässig, wenn eine vorgeschlagene Sensorvorrichtung als Interferometeranordnung aufgebaut ist. In diesem Zusammenhang ist zu erwähnen, dass es auch hier, ähnlich wie bei vorgeschlagenen oder bekannten Ringinterferometern, vorteilhaft ist, wenn die Durchmesser der Kerne der Mehrkernfaser so klein sind, dass die Kerne jeweils nur einen Mode führen können. Störende Mantelmoden können zum Verschwinden gebracht werden, indem die Mehrkernfaser so lang gemacht wird, dass die Mantelmoden abgeklungen sind, bevor sie das Ende der Faser erreichen und/oder indem ein Modenabstreifer zum Abstreifen störender Mantelmoden an der Faser vorgesehen ist.

Es gibt mehrere Möglichkeiten, eine vorgeschlagene Sensorvorrichtung als Interferometeranordnung aufzubauen. Bei einer Ausführungsform wird eine Mehrkernfaser 1 verwendet, bei der zwei nebeneinander verlaufende Kerne 31 und 32 so weit voneinander entfernt sind, dass keine nennenswerte Überkopplung zwischen ihnen auftritt. Daher muss Licht, welches die Kerne durchläuft, ausserhalb der Faser zur Interferenz gebracht werden. Dies geschieht am zweckmässigsten so, dass die lichtempfindliche Einrichtung 4 eine Lichtempfangsfläche 40, 410, 420 aufweist, welche in einem Strahlengang 400, 410, 520 des durch die beiden Kerne 31 und 32 hindurchgegangenen und durch Überlagerung zur Interferenz gebrachten Lichts angeordnet ist.

Eine einfache Realisierung einer solchen Einrichtung ist in der Fig. 4 dargestellt. Hier besteht die Lichtempfangsfläche im wesentlichen nur aus einem Auffangschirm 40, auf dem das Interferenzmuster unmittelbar beobachtbar ist. Selbstverständlich könnten zur Verbesserung der Bildqualität, zur Vergrösserung oder Verkleinerung des Interferenzbildes, Abbildungsoptiken verwendet werden, die im Strahlengang des durch die Kerne 31 und 32 hindurchgegangenen Lichts anzuordnen sind. Das auf dem Auffangschirm beobachtbare Interferenzmuster ändert sich, wenn die Phasengeschwindigkeit des durch einen der beiden Kerne hindurchgegangenen Lichts relativ zur Phasengeschwindigkeit des durch den anderen Kern hindurchgegangenen Lichts ändert. Dies ist gleichbedeutend mit einer Änderung der besagten Laufzeitdifferenz. Die Lage der dunklen oder hellen Strukturen des Interferenzmusters ist ein Mass für den Unterschied der Phasengeschwindigkeiten in beiden Kernen.

Damit das durch die Kerne hindurchgegangene Licht interferieren kann, muss interferenzfähiges Licht in die Kerne eingekoppelt werden. Am besten wird dazu Licht einer Quelle, beispielsweise eines Lasers, verwendet. Günstig ist es dabei, wenn das einzukoppelnde Licht auch polarisiert ist, am besten linear polarisiert.

Bei Verwendung von linear polarisiertem Licht kann es vorkommen, dass die Mehrkernfaser dieses Licht in elliptisch polarisiertes Licht umwandelt, was zur Folge hätte, dass sich der Kontrast im Interferenzmuster verschlechtern würde. Es ist daher zur Erzielung eines guten Kontrastes vorteilhaft, wenn im Strahlengang des aus den Kernen ausgekoppelten Lichts ein linearer Polarisator 6 angeordnet wird, der bezüglich des von der Quelle ausgesandten linear polarisierten Lichts auf grösste Durchlässigkeit, d. h. parallel zur Polarisation der Quelle, eingestellt ist. In der Fig. 4 und auch in den im folgenden beschriebenen Anordnungen ist deshalb ein derartiger Polarisator 6 vorgesehen.

Anstelle einer visuellen Beobachtung oder Überwachung des Interferenzmusters mit einem Auffangschirm kann auch eine elektronische Überwachung des Interferenzmusters verwendet werden. In einem solchen Fall besteht eine Lichtempfangsfläche aus einer lichtempfindlichen Fläche eines lichtempfindlichen Detektors, der eine Lichtintensität im Interferenzmuster, vorzugsweise die integrale Intensität des Musters, überwacht.

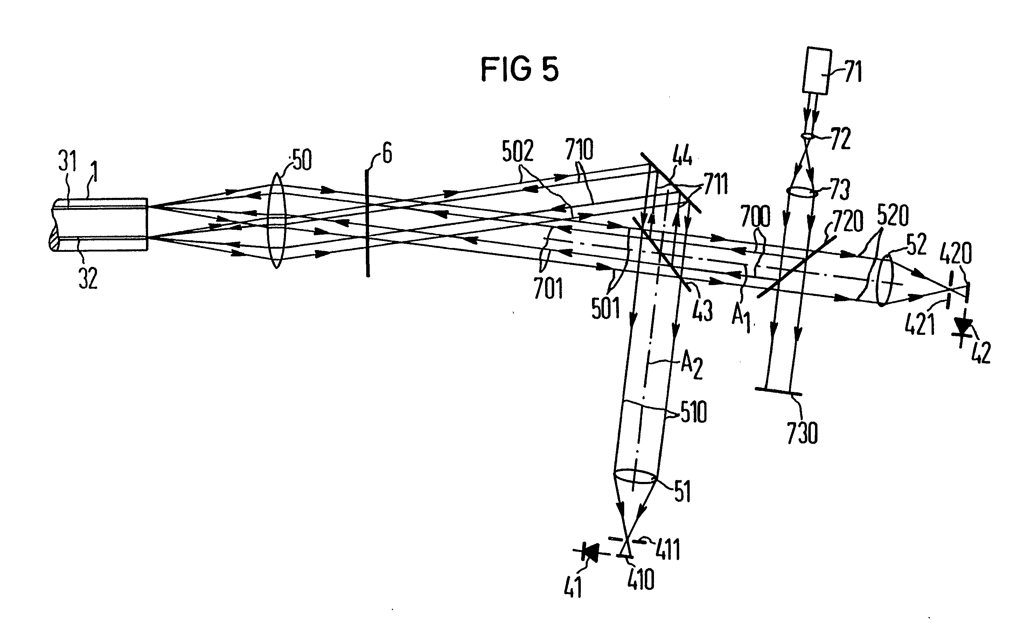

Eine Ausführungsform einer Empfangseinrichtung für diesen Fall ist in der Fig. 5 dargestellt. Es sind zwei Detektoren 41 und 42 mit jeweils einer Lichtempfangsfläche 410 bzw. 420 vorgesehen. Die Einrichtung weist eine Strahlteilervorrichtung 43, 44 auf, welche von verschiedenen Kernen 31 und 32 ausgehende Lichtstrahlengänge 501 bzw. 502 überlagert jeweils einer der Lichtempfangsflächen 410 bzw. 420 zuführt.

Ein in dem vom Kern 31 herkommenden Strahlengang 501 angeordneter Spiegel 43 ist ein teildurchlässiger Spiegel, der im Winkel von 45° zur Achse des Strahlengangs 501 geneigt ist, während ein in dem vom Kern 32 herkommenden Strahlengang 502 angeordneter Spiegel 44 ein undurchlässiger Spiegel ist, welcher so zur Achse des Strahlengangs 502 geneigt ist und so neben dem teildurchlässigen Spiegel 43 angeordnet ist, dass die Achse des vom Spiegel 44 reflektierten Strahlengangs 502 mit der Achse des vom teildurchlässigen Spiegel 43 reflektierten Strahlengangs 501 zusammenfällt, wodurch vom Spiegel 43 ein Strahlengang 510 mit der Achse $A_2$ ausgeht, in dem Licht aus beiden Kernen 31 und 32 überlagert ist. Dieses überlagerte Licht wird der Lichtempfangsfläche 410 konzentriert zugeführt.

Dem durch den teildurchlässigen Spiegel 43 hindurchgegangenen Licht des Strahlengangs 501 mit der Achse $A_1$ überlagert sich Licht des vom Spiegel 44 reflektierten Strahlengangs, wodurch vom Spiegel 43 ein Strahlengang 520 mit der Achse $A_1$ ausgeht, der ebenfalls Licht aus beiden Kernen 31 und 32 enthält, das auf die Lichtempfangsfläche des anderen Detektors 42 konzentriert wird.

Das von den Kernen 31 und 32 als jeweils divergentes Strahlenbüschel ausgesandte Licht wird zweckmässigerweise durch eine sammelnde Optik gebündelt, wobei es sich empfiehlt, das divergente Licht zunächst durch eine Linse 50 parallel zu machen und das parallele Licht nach Durchgang durch die Strahlteilervorrichtung 43, 44 durch eine zweite Linse 51 bzw. 52 in ein konvergentes Strahlenbüschel umzuwandeln. Die Verwendung von parallel gebündelten Strahlengängen im Bereich der Spiegelvorrichtung ist günstig, weil in diesem Fall der Abstand zwischen den Spiegeln keinen Einfluss auf die Lage der reellen Bilder der Stirnflächen der Kerne 31 und 32 hat. Die Verwendung von konvergierenden Strahlengängen im Bereich zwischen der Linse 50 und der Linse 51 bzw. 52 würde bewirken, dass die reellen Bilder der Kernstirnflächen axial auseinanderfallen.

Es ist auch zweckmässig, in der Taille des von der Linse 51 bzw. 52 gebündelten Lichts eine Blende 411 bzw. 421 zu verwenden, welche Störlicht abhält und die Lichtempfangsfläche 410 bzw. 420 des Detektors 41 bzw. 42 hinter der Blende anzuordnen.

Bei einer anderen möglichen Ausführungsform eines Interferometers wird eine Mehrkernfaser 1 verwendet, bei der zwei nebeneinander verlaufende Kerne 31 und 32 einen so geringen Abstand voneinander aufweisen, dass eine nennenswerte Überkopplung zwischen ihnen auftritt. Wenn sich in dieser Faser infolge einer Verbiegung oder Deformation die Phasengeschwindigkeiten in den beiden Kernen 31 und 32 relativ zueinander ändern, so bewirkt dies unter anderem eine Änderung der Überkopplung. Ferner ändert sich wie in der oben beschriebenen ersten Realisierung die Phasenlage der beiden aus den Kernen austretenden Lichtwellen. Werden die Intensitäten dieser beiden Lichtwellen gemessen, so ist das Verhältnis dieser Intensitäten ein Mass für die relative Phasengeschwindigkeit in den Kernen und damit für die besagte Laufzeitdifferenz. Dementsprechend werden aus einem Kern 31 ausgekoppeltes Licht und aus dem anderen Kern 32 ausgekoppeltes Licht voneinander getrennt einer Lichtempfangsfläche zugeführt.

Für eine elektronische Auswertung ist es wiederum zweckmässig, wenn aus einem Kern ausgekoppeltes Licht einer lichtempfindlichen Fläche eines lichtempfindlichen Detektors und aus dem anderen Kern ausgekoppeltes Licht einer lichtempfindlichen Fläche eines anderen lichtempfindlichen Detektors zugeführt wird.

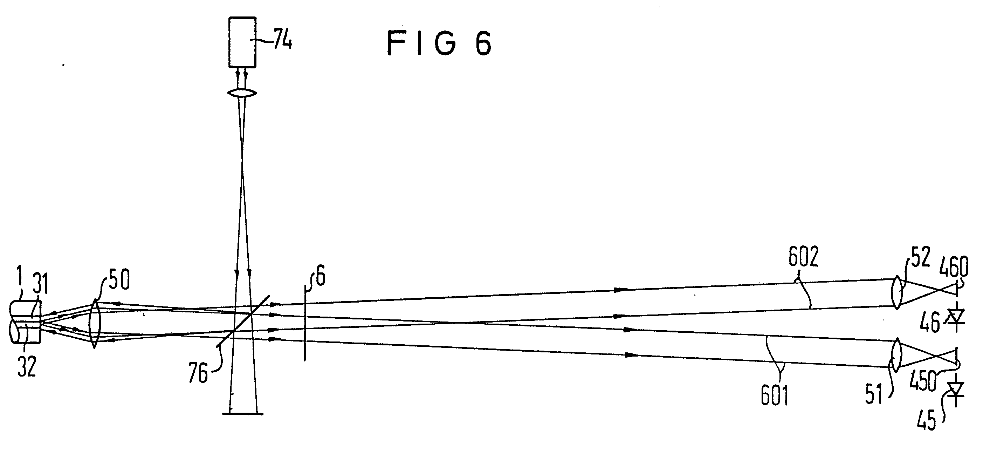

In der Fig. 6 ist ein Ausführungsbeispiel für eine entsprechende Empfangseinrichtung dargestellt. Licht, das aus dem Kern 31 ausgekoppelt worden ist, wird als Strahlengang 601 einer Lichtempfangsfläche 450 eines Detektors 45 zugeführt und Licht, das aus dem anderen Kern 32 ausgekoppelt worden ist, wird getrennt über den Strahlengang 602 einer Lichtempfangsfläche 460 eines zweiten Detektors 46 zugeführt. Auch hier wird das divergent aus einem Kern austretende Licht durch eine sammelnde Optik 50 und 51 bzw. 52 gebündelt. Die Linse 50 wandelt zunächst jedes divergente Lichtstrahlbüschel, welches aus einem Kern austritt, in ein Parallelstrahlbündel um und eine zweite Linse 51 bzw. 52 konzentriert das Licht des Parallelstrahlbündels auf die jeweilige Lichtempfangsfläche 450 bzw. 460. Die Linse 50 könnte auch so bemessen sein, dass sie konvergente Strahlenbüschel erzeugt, die auf die Lichtempfangsflächen 450 bzw. 460 konzentriert sind. Die Linsen 51 und 52 könnten dann entfallen. Auch hier kann Störlicht durch Blenden vermindert werden. Die elektronische Auswertung kann so erfolgen, dass an die beiden Detektoren 45 und 46 ein Quotientenbildner angeschlossen wird, der das Verhältnis der Detektorsignale bildet.

Die Kerne der Mehrkernfaser können sich so nahe sein, dass sie sich berühren oder gar teilweise miteinander verschmolzen sind.

Bei der soeben beschriebenen Ausführungsform kann eine optimale Empfindlichkeit durch eine geeignet gewählte Faserlänge erzielt werden.

Es sei darauf hingewiesen, dass bei der soeben beschriebenen Ausführungsform aus einem Kern 31 ausgekoppeltes Licht und aus dem naheliegenden anderen Kern 32 ausgekoppeltes Licht nicht notwendig voneinander getrennt einer Lichtempfangsfläche zugeführt werden müssen. Es kann auch bei dieser Ausführungsform eine Empfangseinrichtung nach Fig. 5 verwendet werden. Vorzugsweise werden aber die Lichter getrennt einer Lichtempfangsfläche zugeführt.

Als Einkoppelvorrichtung kann bei beiden vorstehend beschriebenen möglichen Ausführungsformen eine Einkoppelvorrichtung verwendet werden, die eine Lichtquelle und eine Strahlteileroptik umfasst, welche einen von der Lichtquelle ausgehenden Strahlengang in Teilstrahlengänge aufspaltet und welche auf jeden Kern das Licht eines Teilstrahlengangs zum Einkoppeln konzentriert.

Eine bevorzugte Ausführungsform einer solchen Einkoppelvorrichtung geht aus der bereits erwähnten Fig. 5 hervor. Als Lichtquelle ist ein Laser 71 vorgesehen, der linear polarisiertes Licht aussendet. Die Strahlteileroptik umfasst einen in den durch eine die Linsen 72 und 73 umfassende Strahlaufweitungsoptik aufgeweiteten Parallelstrahlengang 700 des von der Lichtquelle 71 ausgesandten Lichts schräg zur Achse $A_1$ des Parallelstrahlengangs 700 angeordneten Strahlteilerspiegel 43, einen in dem vom Strahlteilerspiegel 43 reflektierten Teilstrahlengang 711 schräg zu

dessen Achse $A_2$ angeordneten Spiegel 44 und eine im Teilstrahlengang 701 des durch den Strahlteilerspiegel 43 hindurchgegangenen Lichts und im Strahlengang des vom Spiegel 44 reflektierten Lichts angeordnete Sammellinse 50, welche die Teilstrahlenbündel 701 und 710 auf die Kerne 31 und 32 konzentriert. Wie aus der Fig. 5 unmittelbar zu entnehmen ist, ist diese Einkoppelvorrichtung mit der entsprechenden Empfangseinrichtung derart kombiniert, dass die Spiegelvorrichtung und eine Linse der Empfangseinrichtung und die Strahlteileroptik der Einkoppelvorrichtung zusammenfallen. Diese Kombinationsmöglichkeit ist ein besonderer Vorteil, weil so das Ein- und Auskoppeln in eine Faser mit Spiegel ermöglicht wird.

Allerdings ist ein zusätzlicher Strahlteilerspiegel 720 und ein Lichtabsorber 730 erforderlich, wenn beide vom gemeinsamen Strahlteilerspiegel 43 ausgesandten überlagerten Strahlengänge 710 und 720 für die Messung ausgenutzt werden, wie es in der Fig. 5 der Fall ist. Der zusätzliche Strahlteilerspiegel 720 ist dann in einem der beiden Strahlengänge 510 oder 520 anzuordnen und über ihn wird das von der Lichtquelle 71 ausgestrahlte Licht eingekoppelt.

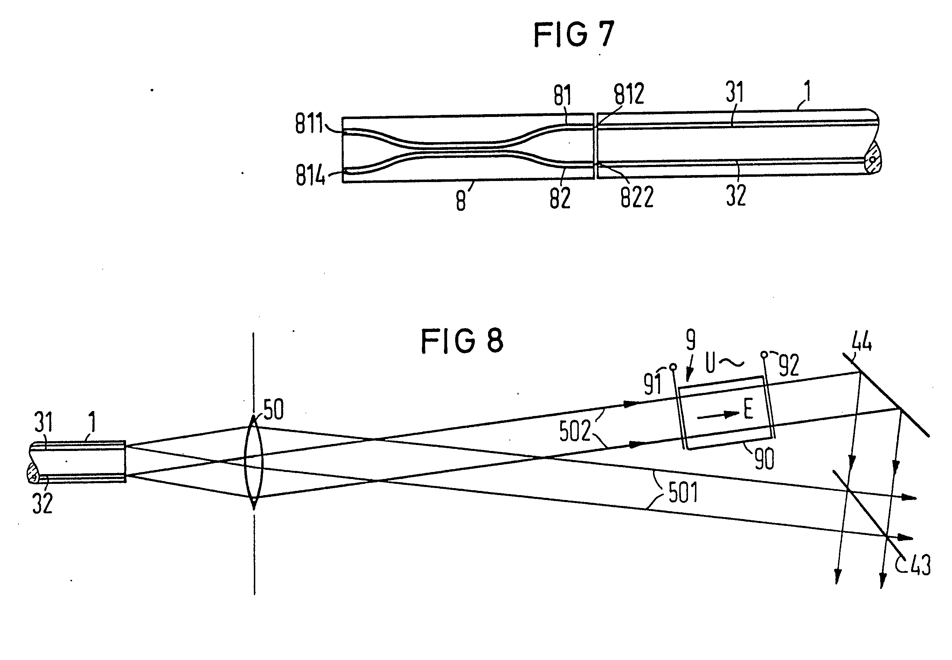

Eine andere Einkoppelvorrichtung ist in der Fig. 7 dargestellt. Sie umfasst als Strahlteileroptik einen optischen Richtkoppler 8 mit einem Eingangstor 811 und zwei Ausgangstoren 812 und 822. Das Eingangstor 811 ist an die Lichtquelle anzukoppeln und jedes Ausgangstor 812 und 822 an je einen Kern 31 bzw. 32 der Mehrkernfaser. Der Richtkoppler ist mit zwei Lichtwellenleitern 81 und 82 realisiert, die sich in einem Mittelabschnitt so nahe sind, dass Licht zwischen ihnen überkoppeln kann. Bei Verwendung einer Mehrkernfaser 1, bei denen sich die Kerne ebenfalls so nahe sind, bringt daher ein solcher Richtkoppler nicht besonders viel. Ein solcher Richtkoppler wird bevorzugt für Mehrkernfasern verwendet, bei denen die Kerne weit auseinanderliegen. Der Abstand der Lichtwellenleiter 81 und 82 kann dem Abstand der Kerne angepasst werden, so dass eine Stosskopplung zwischen Lichtwellenleiter und Kern möglich wird.

Der Richtkoppler 8 kann aber auch als Strahlteilervorrichtung einer Empfangseinrichtung verwendet werden und kann beispielsweise die Strahlteilervorrichtung 43, 44 in Fig. 5 ersetzen. Das Auskoppeln des durch die Kerne 31 und 32 und die Lichtwellenleiter 81 und 82 hindurchgegangenen Lichts kann über das Eingangstor 811, das zugleich Ausgangstor ist und/oder ein viertes Tor 814 erfolgen. Die aus den Toren 811 und 814 ausgekoppelten Lichter entsprechen den in den Strahlengängen 510 und 520 in Fig. 5 geführten Lichtern.

Richtkoppler können beispielsweise als streifenförmige Wellenleiter in integrierter Technik hergestellt werden. Es sind aber auch schon Doppelkernfasern als Richtkoppler vorgeschlagen worden. Prinzipiell sind alle solchen Richtkoppler geeignet.

Eine weitere Einkoppelvorrichtung, welche vorzugsweise bei Mehrkernfasern mit sich naheliegenden Kernen verwendet wird, konzentriert einen von einer Lichtquelle ausgehenden Lichtstrahlengang zum Einkoppeln so auf eine Stirnfläche der Mehrkernfaser, dass verschiedene Kerne beleuchtet werden. In der Fig. 6 ist ein Beispiel einer solchen Einkoppelvorrichtung gezeigt. Auch sie ist für den Fall, dass über die gleiche Stirnfläche der Mehrkernfaser ein- und ausgekoppelt wird, mit einer Empfangseinrichtung ohne weiteres kombinierbar. Dies gilt wie bei der Einkoppelvorrichtung nach Fig. 5 sowohl für die Empfangseinrichtung nach Fig. 5 als auch die Empfangseinrichtung nach Fig. 6. In jedem Fall ist lediglich ein im Strahlengang des ausgekoppelten Lichts anzuordnender Strahlteilerspiegel 76 erforderlich, über den das von einer Lichtquelle 74 herkommende Licht über die Linse 50 auf die Kerne konzentriert werden kann. Das durch den Strahlteilerspiegel 76 hindurchgegangene Licht der Lichtquelle 74 wird zweckmässigerweise wieder durch einen Lichtabsorber aufgefangen.

Selbstverständlich können die vorstehend beschriebenen und miteinander kombinierbaren Empfangseinrichtungen und Einkoppelvorrichtungen in dem Fall, dass über verschiedene Stirnflächen ein- und ausgekoppelt wird, auch voneinander getrennt verwendet werden.

Es ist zweckmässig, wenn Licht, das aus einem Kern ausgekoppelt worden ist, und Licht, das aus einem anderen Kern ausgekoppelt worden ist, zumindest bereichsweise in voneinander getrennten Strahlengängen geführt sind, und wenn in einem der getrennten Strahlengänge ein steuerbarer optischer Phasenmodulator angeordnet ist. Mit diesem Phasenmodulator kann dem durch ihn hindurchgehenden Licht zusätzlich eine Phasenverschiebung aufgeprägt werden. Dadurch kann beispielsweise eine relative Phasenverschiebung zwischen den getrennten Strahlengängen ausgeglichen und messtechnisch ausgenutzt werden und es kann bei Aufprägung einer schwankenden Phasenverschiebung zusätzlich Information über die Richtung einer Verbiegung der Mehrkernfaser gewonnen werden.

In der Fig. 8 ist als Beispiel die Anordnung eines Phasenmodulators 9 in einem Strahlengang gezeigt, welcher dem der Fig. 5 entspricht. Als Phasenmodulator 9 kann beispielsweise ein auf dem elektrooptischen Effekt (Pockels-Effekt) beruhender Phasenmodulator verwendet werden. Bei einer Ausführungsform eines solchen Phasenmodulators wird in einem KDP-Kristall 90 über Elektroden 91 und 92, an die eine Spannung U angelegt wird, ein elektrisches Feld E erzeugt, das die Phase des durch den Kristall hindurchgehenden Lichts beeinflusst.

## Patentansprüche

1. Sensorvorrichtung mit einer Mehrkernfaser (1), die als gegenüber physikalischen Einwirkungen empfindliches Element dient,

— wobei die Mehrkernfaser (1) zwei nebeneinander verlaufende, von einem gemeinsamen Mantel (2) umgebene Kerne (31, 32) aufweist, und
— wobei eine lichtempfindliche Einrichtung (4) vorgesehen ist, mit welcher Veränderungen eines bestimmten physikalischen Parameters von durch die beiden Kerne (31, 32) der Mehrkernfaser (1) hindurchgegangenem Licht feststellbar sind, der sich mit einer bestimmten physikalischen Einwirkung auf die Mehrkernfaser (1) ändert, dadurch gekennzeichnet,
— dass die Mehrkernfaser (1) drei oder mehrere nebeneinander verlaufende Kerne (31, 32, 33, 34) aufweist,
— dass diese Kerne so angeordnet sind, dass die Mittelpunkte ihrer Querschnittsflächen nicht auf einer Geraden liegen, und
— dass die lichtempfindliche Einrichtung (4) so ausgebildet ist, dass Veränderungen des bestimmten physikalischen Parameters von Licht feststellbar sind, das durch zwei Kernpaare (31, 32; 33, 34 oder 31, 33; 33, 32 oder 31, 32; 32, 34 usw.) hindurchgegangen ist, wobei die Mittelpunkte der Querschnittsflächen des einen Kernpaares auf einer Geraden und die Mittelpunkte der Querschnittsflächen des anderen Kernpaares auf einer diese Gerade schneidenden anderen Geraden liegen und wobei ein Kern auch zwei Kernpaaren angehören kann.

2. Verfahren nach Anspruch 1, dadurch gekennzeichnet, dass auf einer Stirnfläche der Mehrkernfaser (1) ein Spiegel (5) vorgesehen ist, der bewirkt, dass Licht, das durch jeden der Kerne (31 bis 34) der Zweikernpaare zu ihm gelangt, diesen Kern in der entgegengesetzten Richtung erneut durchläuft.

3. Vorrichtung nach einem der vorhergehenden Ansprüche, dadurch gekennzeichnet, dass die nebeneinander verlaufenden Kerne (31 bis 34) der Mehrkernfaser (1) soweit voneinander entfernt sind, dass keine nennenswerte Überkopplung zwischen ihnen auftritt, und dass die lichtempfindliche Einrichtung (4) eine Lichtempfangsfläche (40) aufweist, welche in einem Strahlengang von durch die Kerne hindurchgegangenem und durch Überlagerung zur Interferenz gebrachtem Licht angeordnet ist.

4. Vorrichtung nach Anspruch 1 oder 2, dadurch gekennzeichnet, dass die nebeneinander verlaufenden Kerne (31 bis 34) einen so geringen Abstand voneinander aufweisen, dass eine nennenswerte Überkopplung zwischen ihnen auftritt, so dass die jeweils übergekoppelten Lichtstrahlen voneinander getrennt einer Lichtempfangsfläche zugeführt werden können.

## Claims

1. A sensor device having a multi-core fibre (1) which serves as an element sensitive to physical influences,
— wherein the multi-core fibre (1) possesses two cores (31, 32) which extend beside one another and are surrounded by a common sheath (2), and

– wherein is arranged a light-sensitive device (4), by means of which changes of a specific physical parameter can be detected by light which has passed through the two cores (31, 32) of the multicore fibre (1), which parameter changes with a specific physical influence on the multicore fibre (1), characterised in

– that the multi-core fibre (1) has three or more cores (31, 32, 33, 34) which extend beside one another,

– that these cores are arranged in such a manner that the centre points of their cross-sectional surfaces do not lie on a straight line, and

– that the light-sensitive device (4) is contrived to be such that changes of the specific physical parameter can be detected by light which has passed through two pairs of cores (31, 32; 33, 34 or 31, 32; 33, 32 or 31, 32; 32, 34 etc.), where the centre points of the cross-sectional surfaces of the one core pair lie on a straight line and the centre points of the cross-sectional surfaces of the other core pair lie on another straight line which intersects this straight line and where one core can be assigned to two pairs of cores.

2. A process as claimed in Claim 1, characterised in that there is arranged on an end face of the multi-core fibre (1) a reflector (5) which causes the light which reaches said reflector through each of the cores (31 to 34) of the two-core pairs, to pass back through the core in the opposite direction.

3. A device as claimed in one of the preceding Claims, characterised in that the cores (31 to 34) of the multi-core fibre (1), which extend beside one another, are spaced apart to such an extent that only negligible coupling occurs between them, and that the light-sensitive device (4) has a light receiving surface (40) which is arranged in a light path of light which has passed through the cores and has been brought to interference by superimposition.

4. A device as claimed in Claim 1 or 2, characterised in that the cores (31 to 34) which extend beside one another are at such a small distance from one another that negligible overcoupling occurs between them, so that the respectively coupled light rays can be separately sent to a light receiving surface.

**Revendications**

1. Capteur comprenant une fibre à plusieurs âmes (1) qui sert d'élément sensible à des actions physiques,

– dans lequel la fibre (1) présente deux âmes (31, 32) s'étendant l'une à côté de l'autre et entourées d'une gaine commune (2) et

– dans lequel est prévu un dispositif photosensible (4) au moyen duquel peuvent être constatés des changements d'un paramètre physique déterminé de lumière ayant traversé les deux âmes (31, 32) de la fibre (1), paramètre qui change sous l'effet d'une action physique déterminée sur la fibre (1) caractérisé en ce

– que la fibre (1) présente trois ou davantage d'âmes (31, 32, 33, 34) s'étendant les unes à côté des autres,

– que ces âmes sont disposées de manière que les centres des aires de leurs sections transversales ne soient pas situés sur une droite, et

– que le dispositif photosensible (4) est réalisé de manière que des changements du paramètre physique déterminé puissent être constatés au moyen de lumière qui a traversé deux paires d'âmes (31, 32; 33, 34 ou 31, 33; 33, 32 ou 31, 32; 32, 34 et ainsi de suite), les centres des aires des sections transversales de l'une des paires d'âmes étant situés sur une droite et les centres des aires de sections droite de l'autre paire d'âmes étant situés sur une autre droite coupant celle mentionnée en premier, une âme pouvant également appartenir à deux paires d'âmes.

2. Capteur selon la revendication 1, caractérisé en ce que l'une des faces extrêmes de la fibre à plusieurs âmes (1) présente un miroir (5) qui a pour effet que la lumière qui parvient à ce miroir à travers chacune des âmes (31 à 34) des paires d'âmes retraverse cette âme en sens contraire.

3. Capteur selon une des revendications précédentes, caractérisé en ce que les âmes (31 à 34) s'étendant l'une à côté de l'autre de la fibre à plusieurs âmes (1) sont si éloignées l'une de l'autre qu'il n'y a pas de surcouplage notable entre elles et que le dispositif photosensible (4) présente une surface de réception de la lumière (40) qui est disposée dans une marche de rayons de lumière ayant traversé les âmes et amenée à interférence par superposition.

4. Capteur selon la revendication 1 ou 2, caractérisé en ce que les âmes (31 à 34) s'étendant l'une à côté de l'autre ont une si faible distance l'une de l'autre qu'un surcouplage notable se produit entre elles, de sorte que les rayons lumineux à surcouplage peuvent être amenés séparément l'un de l'autre à une surface réceptrice de lumière.

FIG 1

FIG 2a    FIG 2b    FIG 2c    FIG 2d

FIG 3

FIG 4

**FIG 5**

FIG 6

# FIG 7

# FIG 8

0 038 950